# EUROPEAN PATENT SPECIFICATION

(11) **EP 2 843 880 B1**
(45) Date of publication and mention of the grant of the patent: **25.07.2018**
(21) Application number: 13781648.4
(22) Date of filing: 15.02.2013
(51) Int. Cl.: H04L 12/709, H04L 12/707, H04L 12/28, H04L 12/703

(54) **SWITCH, TRANSMISSION METHOD, PROGRAM, AND RECORDING MEDIUM**
SCHALTER, ÜBERTRAGUNGSVERFAHREN, PROGRAMM UND AUFZEICHNUNGSMEDIUM
COMMUTATEUR, PROCÉDÉ DE TRANSMISSION, PROGRAMME ET SUPPORT D'ENREGISTREMENT

(30) Priority: 27.04.2012 JP 2012103709
(43) Date of publication of application: 04.03.2015
(73) Proprietor: Allied Telesis Holdings K.K., Tokyo 141-0031 (JP)
(72) Inventor: YAMAMOTO, Hiroyuki, Tokyo 141-0031 (JP)
(74) Representative: Hess, Peter K. G.
(86) International application number: PCT/JP2013/054421
(87) International publication number: WO 2013/161366

(56) References cited:
- JP-A- 2002 232 427
- JP-A- 2008 067 085
- "Multiple Systems Link Aggregation Control Protocol ; bq-rick-van-t-spijker-mslacp-final-31-05-2 010-1104", IEEE DRAFT; BQ-RICK-VAN-T-SPIJKER-MSLACP-FINAL-31-05-2 010-1104, IEEE-SA, PISCATAWAY, NJ USA, vol. 802.1, 7 April 2011 (2011-04-07), pages 1-78, XP068008118, [retrieved on 2011-04-07]
- Anonymous: "Multichassis Link Aggregation Group - Knowledge Base", , 9 February 2012 (2012-02-09), pages 1-5, XP055227537, Retrieved from the Internet: URL:https://web.archive.org/web/2012020904 3905/http://sites.google.com/site/amitscis cozone/home/link-aggregation/multichassis- link-aggregation-group [retrieved on 2015-11-11]
- "IEEE Std 802.1AX (TM) -2008 IEEE Standard for Local and metropolitan area networks-", , 3 November 2008 (2008-11-03), pages 1-163, XP055216396, 3 Park Avenue, New York, NY 10016-5997, USA ISBN: 973-0-73-815794-8 Retrieved from the Internet: URL:http://standards.ieee.org/getieee802/d ownload/802.1AX-2008.pdf [retrieved on 2015-09-28]

## Description

### Technical Field

The present invention relates to link aggregation relating to a network device (such as a switch).

### Background Art

When two network devices (such as a switch and a server) are connected with each other via one certain line, if data communicated between the network devices is excessive, communication can be delayed.

In this case, the communication can be carried out at a high speed by connecting the two network devices via multiple lines, and treating the multiple lines as one logical line (referred to as link aggregation, refer to Patent Documents JP2005333549, US6910149, and US7173934). For example, if the two network devices are connected via four lines, it is expected that the communication speed be approximately four times as high as that in a case in which the two network devices are connected via one line.

Moreover, according to the link aggregation, even if a part (one, for example) of the multiple lines fails, the communication can be continued via the other lines.

The LACP (Link Aggregation Control Protocol) (refer to Patent Documents JP2005333549 and US 6910149) is often used in order to set the link aggregation.

Document "Multiple Systems Link Aggregation Control Protocol ; bq-rick-van-t-spijker-mslacp-final-31-05-2010-1104", IEEE DRAFT; BQ-RICK-VAN-T-SPIJKER-MSLACP-FINAL-31-05-2010-1104, IEEE-SA, PISCATAWAY, NJ USA, vol. 802.1, 7 April 2011 (2011-04-07), pages 1-78, XP068008118, [retrieved on 2011-04-07] relates to network recovery in a failure scenario, whereby a network designer has to consider redundant connections to one or multiple devices in the network. In the document posssibilites are investigated to support Link Aggregation Groups spanning two or multiple systems.

### Summary of the Invention

The present invention is defined in the independent claims. The dependent claims define particular embodiments of the invention.

On this occasion, any of the multiple lines which can be treated as one line by means of the LACP must serve to connect the same network devices.

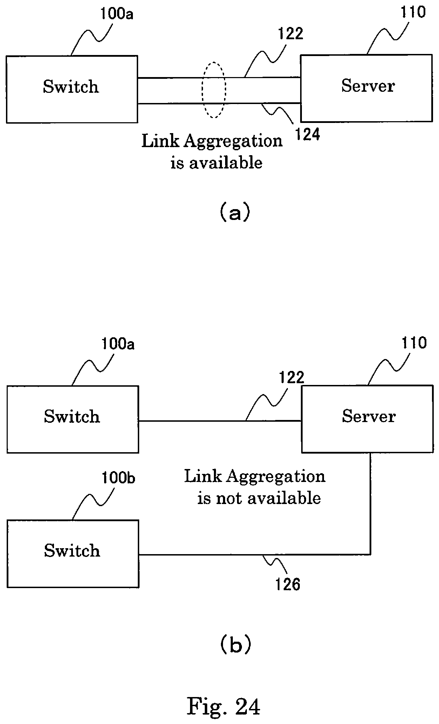

FIG. 24 is a diagram showing the conventional technology, and shows a network configuration (FIG. 24(a)) for a case in which the link aggregation is available by means of the LACP and a network configuration (FIG. 24(b)) for a case in which the link aggregation is not available by means of the LACP.

Referring to FIG. 24(a), either of a line 122 and a line 124 connects a switch 100a and a server 110 with each other, and can be subject to the link aggregation by means of the LACP.

Moreover, referring to FIG. 24(b), the line 122 connects the switch 100a and the server 110 with each other, on the other hand, a line 126 connects a switch 100b and the server 110 with each other, and the line 122 and the line 126 connect the different network devices (switch 100a and the switch 100b). In this case, the link aggregation by means of the LACP is not available.

However, there is a need for applying the link aggregation to the line 122 and the line 126.

Then, the present invention has an object to provide the link aggregation for another network device when two network devices (switches) are connected to the other network device.

According to a switch for transmitting an LACP frame to a network device of the present invention, other switch transmits other LACP frame to the network device; the LACP frame and the other LACP frame serve to request link aggregation from the network device; and a system identifier of the LACP frame is the same as the system identifier of the other LACP frame.

According to the thus constructed switch, an LACP frame is transmitted to a network device. Other switch transmits other LACP frame to the network device. The LACP frame and the other LACP frame serve to request link aggregation from the network device. A system identifier of the LACP frame is the same as the system identifier of the other LACP frame.

According to the present invention, the switch may include an aggregation information setting unit that receives a notification that the aggregation request by the LACP frame is permitted from the network device, and sets aggregation information, wherein the aggregation information may include a system identifier, an aggregation group identifier, and a port identifier.

According to the switch of the present invention, a bypass port of the switch is connected to a bypass port of the other switch; the switch includes: a link state determination unit that determines presence/absence of a failure on a link to which a port represented by the port identifier is connected, a data transfer unit, if the link state determination unit determines presence of a failure, transfers communication data received by all the ports other than the failed port connected to the link which is determined to be failed and the bypass port, to the bypass port, and a state notification unit that transmits from the bypass port the determination of the presence of a failure made by the link state determination unit; and the aggregation information setting unit deletes the port identifier representing the failed port from the aggregation information, and adds a port identifier representing the bypass port.

According to the switch of the present invention, a bypass port of the switch is connected to a bypass port of the other switch, and the switch includes a data transfer unit that receives determination of presence of a failure from the bypass port, and transfers communication data received by the bypass port to the port represented by the port identifier included in the aggregation information.

According to the switch of the present invention, if the link state determination unit determines presence of a failure, and then determines absence of a failure, the transfer of the communication data by the data transfer unit may be stopped; the state notification unit may transmit the determination of the absence of a failure from the bypass port; and the aggregation information setting unit deletes the port identifier representing the bypass port from the aggregation information, and adds the port identifier representing the failed port.

According to the switch of the present invention, if determination of absence of a failure is received from the bypass port, the transfer of the communication data by the data transfer unit may be stopped.

According to the switch of the present invention, a port other than the bypass port may belong to a plurality of aggregation groups; and the bypass port may be used to transmit determination of presence of a failure on a link belonging to any of the plurality of aggregation groups.

According to the switch of the present invention, a port other than the bypass port may belong to a plurality of aggregation groups; and the bypass port may be used to receive determination of presence of a failure on a link belonging to any of the plurality of aggregation groups.

According to the switch of the present invention, a port other than the bypass port may belong to a plurality of aggregation groups; and the bypass port may be used to transmit determination of absence of a failure on a link belonging to any of the plurality of aggregation groups.

According to the switch of the present invention, a port other than the bypass port may belong to a plurality of aggregation groups; and the bypass port is used to receive determination of absence of a failure on a link belonging to any of the plurality of aggregation groups.

The present invention is a transmission method for transmitting an LACP frame to a network device by using a switch, wherein: other switch transmits other LACP frame to the network device; the LACP frame and the other LACP frame serve to request link aggregation from the network device; and a system identifier of the LACP frame is the same as the system identifier of the other LACP frame.

The present invention is a program of instructions for execution by a computer to perform a process for transmitting an LACP frame to a network device, wherein: other computer transmits other LACP frame to the network device; the LACP frame and the other LACP frame serve to request link aggregation from the network device; and a system identifier of the LACP frame is the same as the system identifier of the other LACP frame.

The present invention is a computer-readable medium having a program of instructions for execution by a computer to perform a process for transmitting an LACP frame to a network device, wherein: other computer transmits other LACP frame to the network device; the LACP frame and the other LACP frame serve to request link aggregation from the network device; and a system identifier of the LACP frame is the same as the system identifier of the other LACP frame.

### BRIEF DESCRIPTION OF THE DRAWINGS

FIG. 1 is a diagram showing a network configuration of switches 20a and 20b according to a first embodiment of the present invention,
FIG. 2 is a functional block diagram showing a configuration of the server (network device) 10 according to the first embodiment,
FIG. 3 is a diagram showing an example of the recorded content of the aggregation group information recording unit 14 according to the first embodiment,
FIG. 4 is a functional block diagram showing a configuration of the switches 20a and 20b according to the first embodiment,
FIG. 5 is a diagram showing information input by the aggregation request input unit 21 of the switch 20a according to the first embodiment (refer to FIG. 5(a)), and information input by the aggregation request input unit 21 of the switch 20b according to the first embodiment (refer to FIG. 5(b)),
FIG. 6 is a diagram showing an example of the recorded content of the aggregation group information recording unit 24 according to the first embodiment
FIG. 7 is a flowchart showing an operation of the server 10 according to the first embodiment,
FIG. 8 is a flowchart showing an operation of the switch 20a and the switch 20b according to the first embodiment,
FIG. 9 is a chart showing flows of operations of the switch 20a, the switch 20b, and the server 10 according to the first embodiment,
FIG. 10 is a diagram showing a network configuration in which a server 30 is added to the server 10 and the switches 20a and 20b,
FIG. 11 is a diagram showing a case in which the link aggregation (group identifier: 0x00AA) is also permitted on the server 30 in the network configuration shown in FIG. 10,
FIG. 12 is a drawing showing a case in which a physical link connecting the port etho of the switch 20b and the port ethi of the server 10 fails in the network configuration shown in FIG. 11,
FIG. 13 is a diagram showing a network configuration of the switches 20a and 20b according to the second embodiment of the present invention (when a physical link fails),
FIG. 14 is a diagram showing a network configuration of the switches 20a and 20b according to the second embodiment of the present invention (when the failed physical link is recovered),
FIG. 15 is a functional block diagram showing a configuration of the switch 20a according to the second embodiment of the present invention,
FIG. 16 is a functional block diagram showing a configuration of the switch 20b according to the second embodiment of the present invention,
FIG. 17 is a flowchart showing an operation of the switch 20a according to the second embodiment,
FIG. 18 is a flowchart showing an operation of the switch 20b according to the second embodiment,
FIG. 19 is a flowchart showing operations of the switch 20a, the switch 20b, and the server 10 according to the second embodiment (when a failure occurs on the physical link),
FIG. 20 is a flowchart showing operations of the switch 20a, the switch 20b, and the server 10 according to the second embodiment (when the physical link recovers from a failure),
FIG. 21 is a diagram showing a case in which the link aggregation (group identifier: 0x00AA) is also permitted on the server 30 in the network configuration shown in FIG. 10, and data is transmitted from the server 10 to the server 30,
FIG. 22 is a diagram showing a network configuration of the switches 20a and 20b according to the third embodiment of the present invention (when a physical link fails),
FIG. 23 is a diagram showing a network configuration of the switches 20a and 20b according to the third embodiment of the present invention (when the physical link recovers from a failure), and
FIG. 24 is a diagram showing the conventional technology, and shows a network configuration (FIG. 24(a)) for a case in which the link aggregation is available by means of the LACP and a network configuration (FIG. 24(b)) for a case in which the link aggregation is not available by means of the LACP.

### Modes for Carrying out the Invention

A description will now be given of embodiments of the present invention referring to drawings.

### First Embodiment

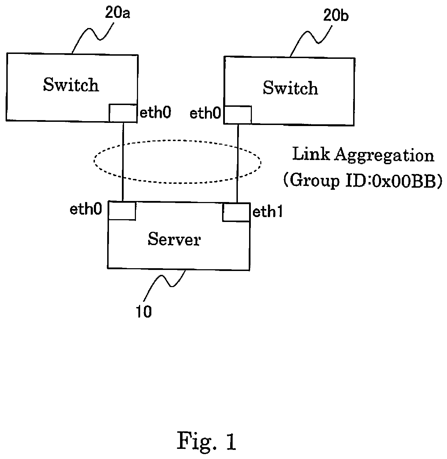

FIG. 1 is a diagram showing a network configuration of switches 20a and 20b according to a first embodiment of the present invention.

A port eth0 of the switch 20a is connected to a port eth0 of a server (network device) 10. A port eth0 of the switch 20b is connected to a port eth1 of the server (network device) 10. The switch 20a transmits an LACP frame to the server 10. The other switch 20b also transmits other LACP frame to the server 10. The LACP frame and the other LACP frame serve to request the link aggregation from the server 10. On this occasion, a system identifier of the LACP frame and a system identifier of the other LACP frame are the same (this is a point different from the conventional LACP), and the link aggregation is thus permitted. It should be noted that an aggregation group identifier (ID) is oxooBB.

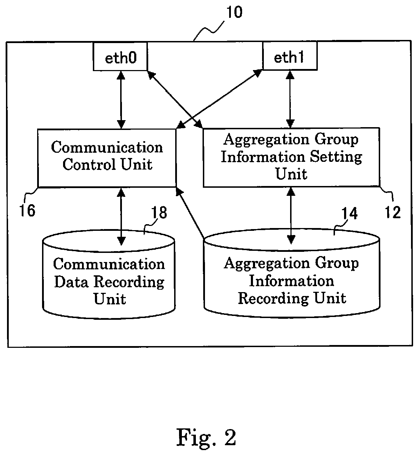

FIG. 2 is a functional block diagram showing a configuration of the server (network device) 10 according to the first embodiment. The server 10 is a well-known server which receives an LACP frame, and permits the link aggregation. The server 10 is a server used in a data center, for example.

The server 10 includes the ports etho and eth1, an aggregation group information setting unit 12, an aggregation group information recording unit 14, a communication control unit 16, and a communication data recording unit 18.

The aggregation group information setting unit 12 receives LACP frames from the port eth0 and the port eth1, and reads out the aggregation group information from the aggregation group information recording unit 14. The aggregation group information setting unit 12 determines whether to permit or not the request for the link aggregation by the LACP frames based on a recorded content in the aggregation group information recording unit 14, and transmits a result thereof (permission or rejection) from the port eth0 or the port eth1.

If the aggregation group information setting unit 12 permits the request for the link aggregation, the aggregation group information setting unit 12 sets aggregation information. Namely, the aggregation group information setting unit 12 updates the recorded content of the aggregation group information recording unit 14.

The aggregation group information recording unit 14 records the aggregation information. The aggregation information includes system identifiers, aggregation group identifiers, and port identifiers.

It should be noted that the system identifier, the aggregation group identifier, and the port identifier are well known identifiers defined in IEEE 802.1AX 5.4.2.2 LACPDU. The system identifier serves to identify the system including the switches 20a and 20b, and the server 10 which permits a request for the link aggregation. The aggregation group identifier serves to identify a group (aggregation group) of lines (physical links) for which a request for aggregation is permitted. The port identifier serves to identify a port relating to the aggregation group.

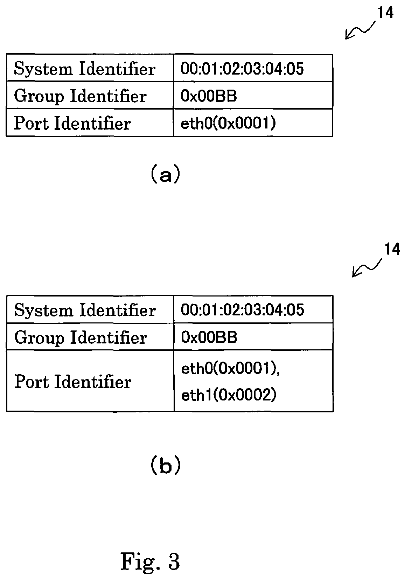

FIG. 3 is a diagram showing an example of the recorded content of the aggregation group information recording unit 14 according to the first embodiment. The aggregation group information recording unit 14 records a system identifier 00:01:02:03:04:05, an aggregation group identifier 0x00BB, and a port identifier etho (0x0001) (refer to FIG. 3(a)), or the system identifier 00:01:02:03:04:05, the aggregation group identifier 0x00BB, and port identifiers etho and eth1 (0x0001, 0x0002) (refer to FIG. 3(b)).

The example in FIG. 3(b) shows a configuration in which physical links relating to the two ports (port identifiers eth0 and eth1) of the server 10 are logically treated as one line (aggregation group). The identifier of this aggregation group is 0x00BB. The identifier of the system (switches 20a and 20b) to which this aggregation group belongs is 00:01:02:03:04:05.

The communication data recording unit 18 records communication data. The communication data implies data communicated between the server 10 and the switch 20a or the switch 20b.

The communication control unit 16 records communication data received by the port eth0 and the port eth1 in the communication data recording unit 18. Moreover, the communication control unit 16 transmits communication data read out from the communication data recording unit 18 from the port eth0 or the port eth1.

When the communication control unit 16 transmits communication data, the communication control unit 16 refers to the recorded content of the aggregation group information recording unit 14, and then carries out the transmission. For example, if the port eth0 and the port eth1 belong to one aggregation group (refer to FIG. 3(b)), the communication data read out from the communication data recording unit 18 is divided, and is transmitted from the port eth0 and the port eth1. For example, it is conceivable that the communication control unit 16 transmits communication data read out from the communication data recording unit 18 sequentially from the port eth0, the port eth1, the port eth0, the port eth1, ...

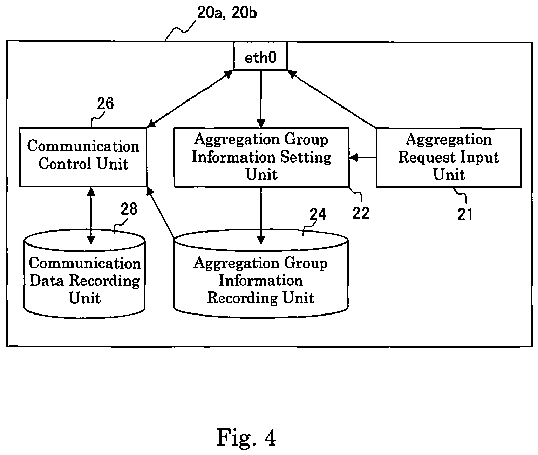

FIG. 4 is a functional block diagram showing a configuration of the switches 20a and 20b according to the first embodiment. Each of the switches 20a and 20b includes the port eth0, an aggregation request input unit 21, an aggregation group information setting unit 22, an aggregation group information recording unit 24, a communication control unit 26, and a communication data recording unit 28.

The aggregation request input unit 21 serves to receive an input of information for requesting the link aggregation.

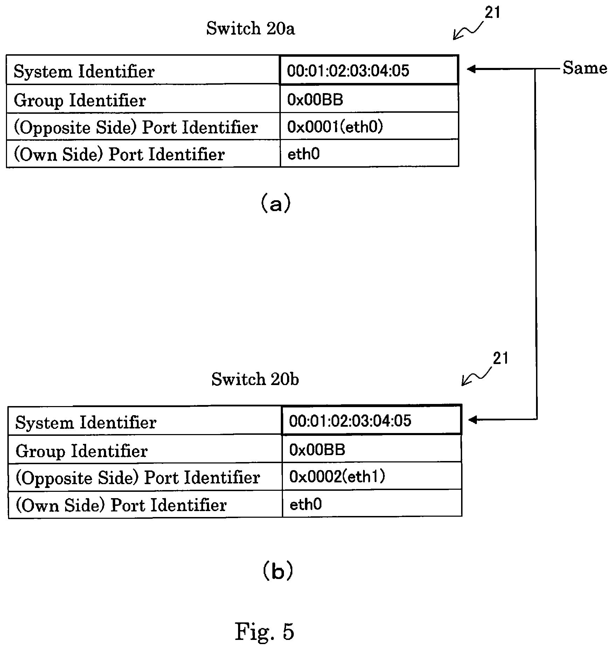

FIG. 5 is a diagram showing information input by the aggregation request input unit 21 of the switch 20a according to the first embodiment (refer to FIG. 5(a)), and information input by the aggregation request input unit 21 of the switch 20b according to the first embodiment (refer to FIG. 5(b)).

Referring to FIG. 5(a), the system identifier 00:01:02:03:04:05, the aggregation group identifier (sometimes simply referred to as "group identifier", hereinafter) 0x00BB, the port identifier 0x0001 (representing the port eth0 of the server 10) on the opposite side (server 10 side), and the port identifier eth0 on the own side (switch 20a side) are input by the aggregation request input unit 21 of the switch 20a.

The system identifier 00:01:02:03:04:05, the aggregation group identifier 0x00BB, and the port identifier 0x0001 on the opposite side (server 10 side) out of the information input by the aggregation request input unit 21 of the switch 20a are stored in an LACP frame, and are transmitted from the port eth0 to the server 10.

Moreover, the system identifier 00:01:02:03:04:05, the aggregation group identifier 0x00BB, and the port identifier etho on the own side (switch 20a side) out of the information input by the aggregation request input unit 21 of the switch 20a are fed to the aggregation group information setting unit 22.

Referring to FIG. 5(b), the system identifier 00:01:02:03:04:05, the aggregation group identifier (sometimes simply referred to as "group identifier", hereinafter) 0x00BB, the port identifier 0x0002 (representing the port eth1 of the server 10) on the opposite side (server 10 side), and the port identifier eth0 on the own side (switch 20b side) are input by the aggregation request input unit 21 of the switch 20b.

The system identifier 00:01:02:03:04:05, the aggregation group identifier 0x00BB, and the port identifier 0x0002 on the opposite side (server 10 side) out of the information input by the aggregation request input unit 21 of the switch 20b are stored in an LACP frame, and are transmitted from the port eth0 to the server 10.

Moreover, the system identifier 00:01:02:03:04:05, the aggregation group identifier 0x00BB, and the port identifier eth0 on the own side (switch 20b side) out of the information input by the aggregation request input unit 21 of the switch 20b are fed to the aggregation group information setting unit 22.

In the above description referring to FIG. 3, FIG. 5(a), and FIG. 5(b), the port identifiers 0x0001 and 0x0002 are described as the port identifiers on the opposite side (server 10 side). However, they are, in a strict sense, identifiers respectively assigned to the ports, which are the ports (eth0 of the switch 20a and eth0 of the switch 20b) connected to the links subject to the link aggregation, of the network devices (switches 20a and 20b) connected to the server 10. They can be confused with the (own) port identifiers eth0, and are thus, for the sake of description, described as the identifiers of the port eth0 and eth1 on the opposite side (server 10 side) corresponding, in one-to-one manner, to eth0 of the switch 20a and eth0 of the switch 20b. Similarly, 0x0001 and 0x0002, which are identifiers respectively assigned, in a strict sense, to eth0 of the switch 20a and eth0 of the switch 20b, are considered as the port identifiers 0x0001 and 0x0002 on the opposite side (server 10 side) in a description hereinafter.

The system identifier 00:01:02:03:04:05 of the LACP frame transmitted from the switch 20a and the system identifier 00:01:02:03:04:05 of the LACP frame transmitted from the switch 20b are the same.

According to the well-known LACP, the system identifier of an LACP frame transmitted from the switch 20a is defined based on the MAC address unique to the switch 20a. The system identifier of an LACP frame transmitted from the switch 20b is defined based on the MAC address unique to the switch 20b. Thus, according to the well-known LACP, the system identifier of an LACP frame transmitted from the switch 20a and the system identifier of an LACP frame transmitted from the switch 20b are originally different from each other. For these system identifiers different from each other, the link aggregation will not be permitted.

However, according to the embodiment of the present invention, the link aggregation is permitted by making the system identifier of an LACP frame transmitted from the switch 20a and the system identifier of an LACP frame transmitted from the switch 20b the same.

When the aggregation group information setting unit 22 receives a notification that an aggregation request via an LACP frame is permitted from the server 10, the aggregation group information setting unit 22 sets the aggregation information. In other words, the aggregation group information setting unit 22 updates the recorded content of the aggregation group information recording unit 24 to a content provided by the aggregation request input unit 21.

The aggregation group information recording unit 24 records the aggregation information. The aggregation information includes system identifiers, aggregation group identifiers, and port identifiers.

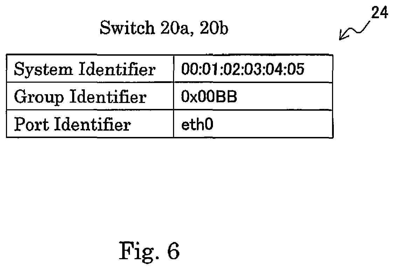

FIG. 6 is a diagram showing an example of the recorded content of the aggregation group information recording unit 24 according to the first embodiment. The recorded content of the aggregation group information recording unit 24 includes the system identifier 00:01:02:03:04:05, the aggregation group identifier 0x00BB, and the port identifier eth0 both for the switches 20a and 20b. This recorded content corresponds to the system identifier 00:01:02:03:04:05, the aggregation group identifier 0x00BB, and the port identifier eth0 on the own side (switch 20a side and switch 20b side) in FIG. 5(a) and FIG. 5(b).

The communication data recording unit 28 records communication data.

The communication control unit 26 records communication data received by the port eth0 in the communication data recording unit 28. Moreover, the communication control unit 26 transmits communication data read out from the communication data recording unit 28 from the port eth0.

When the communication control unit 26 transmits communication data, the communication control unit 26 refers to the recorded content of the aggregation group information recording unit 24, and then carries out the transmission. For example, if only the port etho belongs to one aggregation group (refer to FIG. 6), communication data read out from the communication data recording unit 28 is transmitted only from the port eth0.

A description will now be given of an operation of the first embodiment of the present invention.

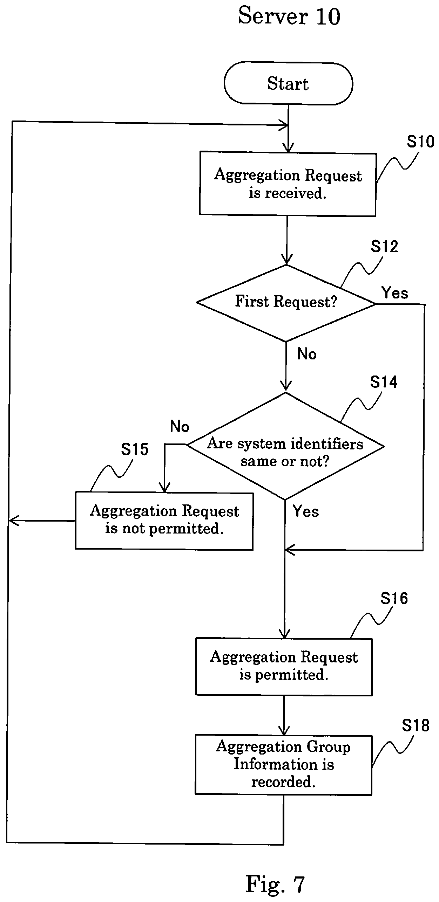

FIG. 7 is a flowchart showing an operation of the server 10 according to the first embodiment.

First, the aggregation group information setting unit 12 receives a request for the link aggregation via an LACP frame from the port eth0 or the port eth1 (S10).

The aggregation group information setting unit 12 determines whether this link aggregation request is a first request relating to an aggregation group relating to the request or not (S12). A group identifier is stored in the LACP frame, and the aggregation group information setting unit 12 determines whether the group identifier is recorded in the aggregation group information recording unit 14 or not.

If the group identifier stored in the LACP frame is not recorded in the aggregation group information recording unit 14, the request is a first request. Conversely, if the group identifier stored in the LACP frame is recorded in the aggregation group information recording unit 14, the request is not a first request.

If the request is a first request (Yes in S12), the aggregation group information setting unit 12 permits the aggregation request (S16). The permission of the aggregation request is transmitted from the aggregation group information setting unit 12 via the port via which the LACP frame has received to the switch 20a or the switch 20b.

Further, the aggregation group information setting unit 12 records aggregation information in the aggregation group information recording unit 14 (S18). The operation of the server 10 returns to the reception of a request for the link aggregation (S10).

If the request is not a first request (No in S12), the aggregation group information setting unit 12 determines whether the system identifier relating to the request and a system identifier (this system identifier should correspond to the group identifier relating to the request) recorded in the aggregation group information recording unit 14 are the same or not (S14). The system identifier is stored in the LACP frame, and the aggregation group information setting unit 12 determines whether this system identifier is recorded in the aggregation group information recording unit 14 or not.

If the system identifier stored in the LACP frame is not recorded in the aggregation group information recording unit 14 (No in S14), the aggregation group information setting unit 12 does not permit the aggregation request (S15). The rejection of the aggregation request is transmitted from the aggregation group information setting unit 12 via the port via which the LACP frame has received to the switch 20a or the switch 20b. The operation of the server 10 returns to the reception of a request for the link aggregation (S10).

If the system identifier stored in the LACP frame is recorded in the aggregation group information recording unit 14 (Yes in S14), the aggregation group information setting unit 12 permits the aggregation request (S16). The permission of the aggregation request is transmitted from the aggregation group information setting unit 12 via the port via which the LACP frame has received to the switch 20a or the switch 20b.

Further, the aggregation group information setting unit 12 records aggregation information in the aggregation group information recording unit 14 (S18). The operation of the server 10 returns to the reception of a request for the link aggregation (S10).

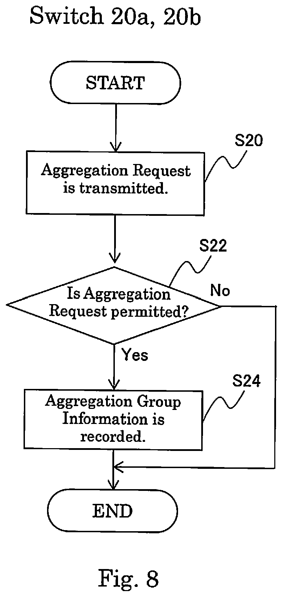

FIG. 8 is a flowchart showing an operation of the switch 20a and the switch 20b according to the first embodiment.

First, the aggregation request input unit 21 receives an input of information for requesting the link aggregation. A system identifier, an aggregation group identifier, and a port identifier of an opposite side (server 10 side) out of the input information are stored in an LACP frame, and are transmitted to the server 10 (S20).

The aggregation group information setting unit 22 determines whether a notification that an aggregation request via an LACP frame is permitted is transmitted from the server 10 or not (S22). If the notification that the aggregation request is permitted is transmitted (Yes in S22), the aggregation group information setting unit 22 records aggregation information in the aggregation group information recording unit 24 (S24). The aggregation information to be recorded out of the information input to the aggregation request input unit 21 includes the system identifier, the aggregation group identifier, and the port identifier on the own side (the switch 20a side or the switch 20b side).

If a notification that the aggregation request is not permitted is transmitted (No in S22), the aggregation group information setting unit 22 does not do anything in particular.

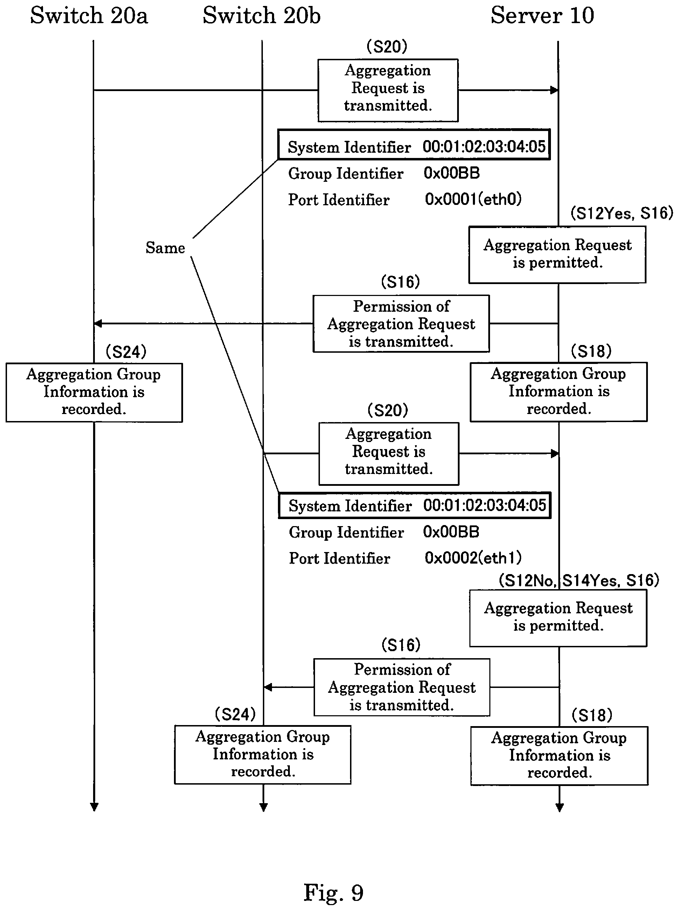

FIG. 9 is a chart showing flows of operations of the switch 20a, the switch 20b, and the server 10 according to the first embodiment.

First, information for requesting the link aggregation is input by the aggregation request input unit 21 of the switch 20a (refer to FIG. 5(a)). A system identifier, an aggregation group identifier, and a port identifier of the opposite side (server 10 side) out of the input information are stored in an LACP frame, and are transmitted to the server 10 (S20). The information transmitted to the server 10 as shown in FIG. 9 includes the system identifier 00:01:02:03:04:05, the aggregation group identifier 0x00BB, and the port identifier 0x0001 (corresponding to eth0) on the opposite side (server 10 side).

The aggregation group information setting unit 12 of the server 10 receives the aggregation request from the port eth0. On this occasion, none is recorded in the aggregation group information recording unit 14, and the group identifier 0x00BB transmitted from the switch 20a is not recorded. Thus, the aggregation group information setting unit 12 determines that the aggregation request from the switch 20a is a first request (Yes in S12), and thus permits the aggregation request (S16). The permission of the aggregation request is transmitted from the aggregation group information setting unit 12 via the port etho to the switch 20a. Then, the aggregation group information setting unit 12 records aggregation information in the aggregation group information recording unit 14 (S18). The aggregation information to be recorded corresponds to the information transmitted from the switch 20a, and is as shown in FIG. 3(a).

The aggregation group information setting unit 22 of the switch 20a confirms that the notification that the aggregation request is permitted has been transmitted from the server 10, and records aggregation information in the aggregation group information recording unit 24 (S24). The aggregation information recorded in the aggregation group information recording unit 24 is as shown in FIG. 6.

Then, information for requesting the link aggregation is input by the aggregation request input unit 21 of the switch 20b (refer to FIG. 5(b)). A system identifier, an aggregation group identifier, and a port identifier of the opposite side (server 10 side) out of the input information are stored in an LACP frame, and are transmitted to the server 10 (S20). The information transmitted to the server 10 as shown in FIG. 9 includes the system identifier 00:01:02:03:04:05, the aggregation group identifier 0x00BB, and the port identifier 0x0002 (corresponding to eth1) on the opposite side (server 10 side).

The aggregation group information setting unit 12 of the server 10 receives the aggregation request from the port eth1. On this occasion, the group identifier 0x00BB is recorded in the aggregation group information recording unit 14 as shown in FIG. 3(a). On the other hand, the information transmitted from the switch 20b also includes the group identifier 0x00BB. Thus, the aggregation group information setting unit 12 determines that the aggregation request from the switch 20a is not a first request (No in S12), and determines whether the system identifier is the same or not (S14). Then, the system identifier 00:01:02:03:04:05 associated with the group identifier 0x00BB is recorded in the aggregation group information recording unit 14 as shown in FIG. 3(a). On the other hand, the information transmitted from the switch 20b also includes the system identifier 00:01:02:03:04:05. Thus, the aggregation group information setting unit 12 determines that the system identifier is the same (Yes in S14) and permits the aggregation request (S16). The permission of the aggregation request is transmitted from the aggregation group information setting unit 12 via the port eth1 to the switch 20b. Then, the aggregation group information setting unit 12 records aggregation information in the aggregation group information recording unit 14 (S18). The port identifier eth1 transmitted from the switch 20b is added to the recorded content of the aggregation group information recording unit 14, and the recorded content is thus as shown in FIG. 3(b).

The aggregation group information setting unit 22 of the switch 20b confirms that the notification that the aggregation request is permitted has been transmitted from the server 10, and records aggregation information in the aggregation group information recording unit 24 (S24). The aggregation information recorded in the aggregation group information recording unit 24 is as shown in FIG. 6.

According to the well-known LACP, the system identifier of an LACP frame transmitted from the switch 20a and the system identifier of an LACP frame transmitted from the switch 20b are originally different from each other. Thus, the link aggregation cannot be originally applied to the port etho connected to the switch 20a and the port eth1 connected to the switch 20b.

However, according to the first embodiment, the system identifier of an LACP frame transmitted from the switch 20a and the system identifier of an LACP frame transmitted from the switch 20b are made the same.

As a result, even if both of two network devices (switches 20a and 20b) are connected to another network device (server 10), the link aggregation can be carried out on the server 10.

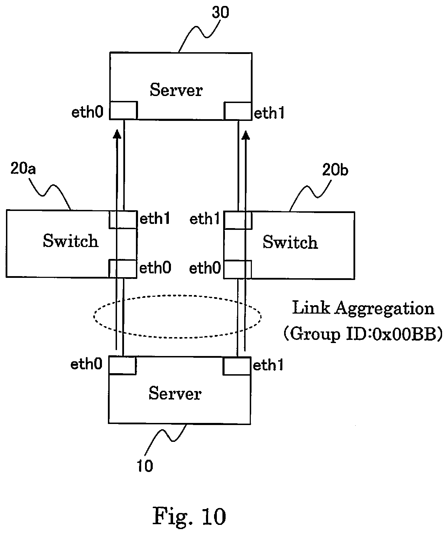

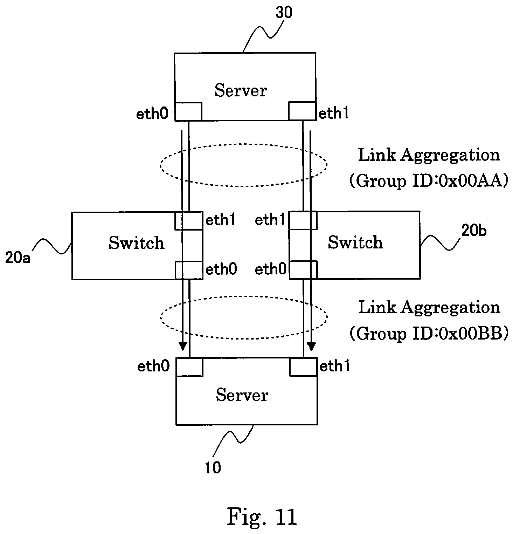

A description will now be given of an example of an effect brought about by the link aggregation carried out on the server 10. FIG. 10 is a diagram showing a network configuration in which a server 30 is added to the server 10 and the switches 20a and 20b. It should be noted that flows of data to be transmitted are represented by solid arrows (and in FIG. 11 to FIG. 14 as well).

A port eth1 of the switch 20a is connected to a port eth0 of the server 30. A port eth1 of the switch 20b is connected to a port eth1 of the server 30. On this occasion, if data is transmitted from the server 10 to the server 30, and the link aggregation is available, the data to be transmitted can be divided into data via the switch 20a and data via the switch 20b. As a result, the data transmission can be carried out at a high speed, and even if the switch 20a or the switch 20b fails, the data transmission can be carried out.

### Second Embodiment

The switches 20a and 20b according to the second embodiment are different from those of the first embodiment in that each of the switches 20a and 20b has a bypass port eth3.

Before a description will be given of the switches 20a and 20b according to the second embodiment, a description will now be given of necessity of the bypass port eth3.

FIG. 11 is a diagram showing a case in which the link aggregation (group identifier: 0x00AA) is also permitted on the server 30 in the network configuration shown in FIG. 10. The server 30 has the same configuration as that of the server 10, and the link aggregation can be permitted on the server 30 as on the server 10. Then, if data is transmitted from the server 30 to the server 10, the data to be transmitted can be divided into data via the switch 20a and data via the switch 20b.

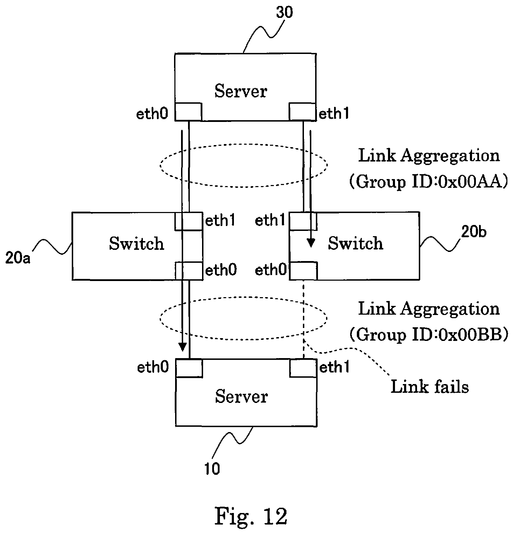

FIG. 12 is a drawing showing a case in which a physical link connecting the port eth0 of the switch 20b and the port eth1 of the server 10 fails in the network configuration shown in FIG. 11. Data cannot be transmitted from the server 30 via the switch 20b to the server 10, and there poses a problem that a part of data to be transmitted from the server 30 to the server 10 cannot be transmitted.

Then, the bypass ports eth3 according to the second embodiment of the present invention become necessary.

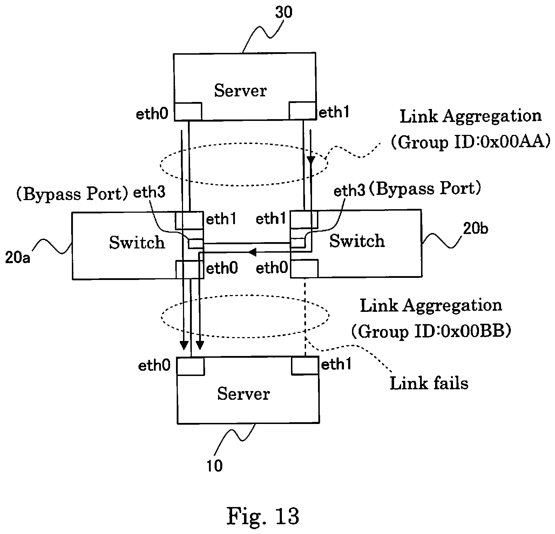

FIG. 13 is a diagram showing a network configuration of the switches 20a and 20b according to the second embodiment of the present invention (when a physical link fails). Both the switch 20a and the switch 20b according to the second embodiment have the bypass ports eth3. The bypass port eth3 of the switch 20a is connected to the bypass port eth3 of the switch 20b.

The data transmitted from the server 30 via the switch 20b to the server 10 is transmitted, in place of the physical link connecting the port eth0 of the switch 20b and the port eth1 of the server 10 with each other, via a physical link connecting the bypass ports eth3 with each other, further via the switch 20a to the server 10.

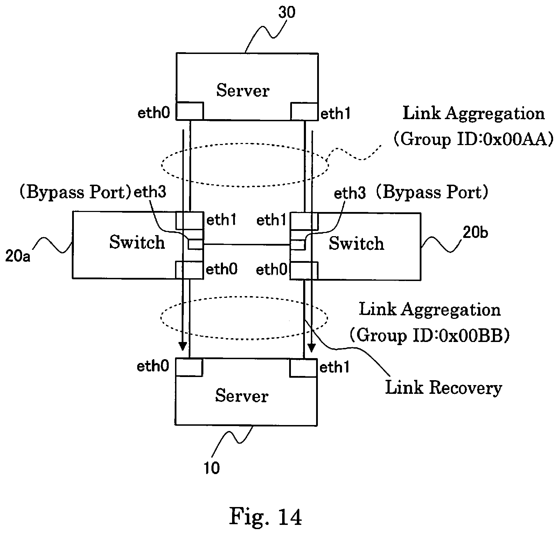

FIG. 14 is a diagram showing a network configuration of the switches 20a and 20b according to the second embodiment of the present invention (when the failed physical link is recovered).

When the physical link connecting the port eth0 of the switch 20b and the port eth1 of the server 10 with each other recovers from the failure, the use of the physical link connecting the bypass ports eth3 with each other is stopped. The data to be transmitted from the server 30 via the switch 20b to the server 10 is transmitted via the physical link connecting the port etho of the switch 20b and the port eth1 of the server 10 with each other to the server 10.

The configuration of the server 10 according to the second embodiment of the present invention is the same as that of the first embodiment, and hence description thereof is omitted.

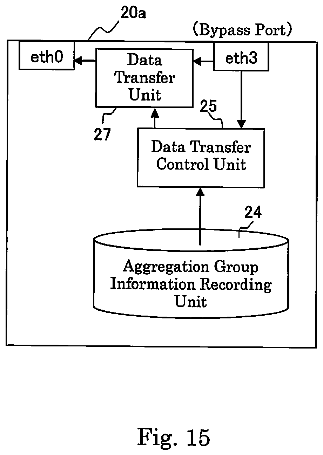

FIG. 15 is a functional block diagram showing a configuration of the switch 20a according to the second embodiment of the present invention. It should be noted that the same portions as those of the first embodiment (refer to FIG. 4) are not illustrated except for the port eth0 and the aggregation group information recording unit 24.

The switch 20a according to the second embodiment includes the bypass port eth3, a data transfer control unit 25, and a data transfer unit 27 in addition to the switch 20a according to the first embodiment.

The data transfer control unit 25 receives determination that a failure is present from the bypass port eth3. In other words, the data transfer control unit 25 receives information that the physical link (physical link connecting the port eth0 of the switch 20b and the port eth1 of the server 10) is failed along with the group identifier 0x00BB of the aggregation group to which the failed physical link belongs from the switch 20b.

The data transfer control unit 25 further reads the port identifier etho included in the aggregation information (refer to FIG. 6) including the group identifier 0x00BB of the aggregation group to which the failed physical link belongs from the aggregation group information recording unit 24. Then, the data transfer control unit 25 causes the data transfer unit 27 to transfer communication data received by the bypass port eth3 to the port eth0 represented by the port identifier included in the aggregation information.

The data transfer unit 27 undergoes the above-mentioned control by the data transfer control unit 25, and thus transfers the communication data received by the bypass port eth3 to the port eth0 represented by the port identifier included in the aggregation information. This transfer can be implemented as flooding.

On this occasion, a description is also given of a function when the physical link relating to the port eth0 recovers from a failure.

In this case, the data transfer control unit 25 receives determination that a failure is absent from the bypass port eth3, and causes the data transfer unit 27 to stop the transfer of the communication data (transfer from the bypass port eth3 to the port etho).

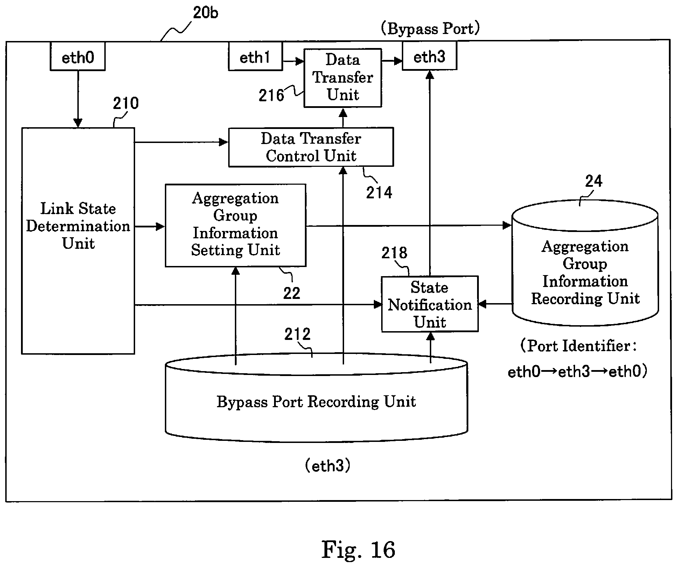

FIG. 16 is a functional block diagram showing a configuration of the switch 20b according to the second embodiment of the present invention. It should be noted that the same portions as those of the first embodiment (refer to FIG. 4) are not illustrated except for the port eth0, the aggregation group information setting unit 22, and the aggregation group information recording unit 24.

The switch 20b according to the second embodiment includes the bypass port eth3, a link state determination unit 210, a bypass port recording unit 212, a data transfer control unit 214, a data transfer unit 216, and a state notification unit 218 in addition to the switch 20b according to the first embodiment.

The link state determination unit 210 determines whether a failure is present or absent on the link to which the port eth0 represented by the port identifier included in the aggregation information (refer to FIG. 6) recorded in the aggregation group information recording unit 24 is connected.

The bypass port recording unit 212 records the identifier eth3 of the bypass port.

If the link state determination unit 210 determines presence of a failure on the physical link relating to the port eth0, the data transfer control unit 214 causes the data transfer unit 216 to transfer communication data received by all ports (port eth1) other than the failed port eth0 and the bypass port eth3 to the bypass port eth3. It should be noted that the failed port is a port connected to a link which is determined to be failed by the link state determination unit 210.

The data transfer unit 216 undergoes the above-described control by the data transfer control unit 214, and transfers the communication data received by all the ports other than the failed port eth0 and the bypass port eth3 to the bypass port eth3. This transfer can be implemented as flooding.

The state notification unit 218 receives the determination of the presence of the failure made by the link state determination unit 210. Then, the state notification unit 218 reads the configuration that the bypass port is the port eth3 from the bypass port recording unit 212. Further, the state notification unit 218 reads, from the aggregation group information recording unit 24, the group identifier 0x00BB of the aggregation group to which the port eth0 relating to the physical link determined to be failed belongs (refer to FIG. 6). Then, the state notification unit 218 transmits the determination of the presence of a failure made by the link state determination unit 210 along with the group identifier 0x00BB from the bypass port eth3.

It should be noted that the aggregation information setting unit 22 deletes the port identifier eth0 representing the failed port from the aggregation information (refer to FIG. 6) recorded in the aggregation group information recording unit 24, and adds the port identifier eth3 representing the bypass port.

On this occasion, a description is also given of a function when the physical link relating to the port eth0 recovers from a failure.

If the link state determination unit 210 determines presence of a failure, and then determines absence of the failure (namely, a physical link recovers from the failure), the data transfer control unit 214 receives the state from the link state determination unit 210, and causes the data transfer unit 216 to stop the transfer of communication data.

The state notification unit 218 receives the determination of the absence of the failure made by the link state determination unit 210. Then, the state notification unit 218 reads the configuration that the bypass port is the port eth3 from the bypass port recording unit 212. Further, the state notification unit 218 reads, from the aggregation group information recording unit 24, the group identifier 0x00BB of the aggregation group to which the port etho relating to the physical link determined not to be failed belongs (refer to FIG. 6). Then, the state notification unit 218 transmits the determination of the absence of a failure made by the link state determination unit 210 along with the group identifier 0x00BB from the bypass port eth3.

It should be noted that the aggregation information setting unit 22 deletes the port identifier eth3 representing the bypass port from the aggregation information recorded in the aggregation group information recording unit 24, and adds the port identifier etho representing the failed port. As a result, the aggregation information returns to the information shown in FIG. 6.

A description will now be given of an operation of the second embodiment of the present invention.

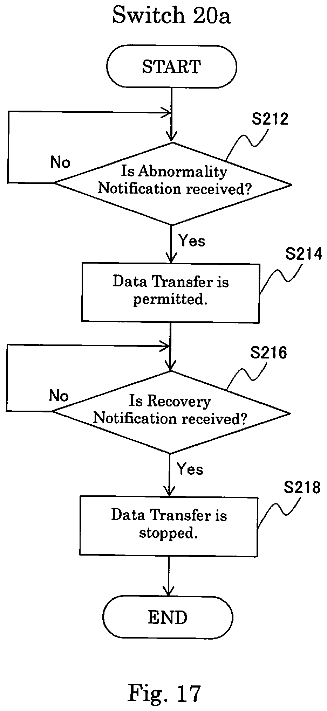

FIG. 17 is a flowchart showing an operation of the switch 20a according to the second embodiment.

First, the data transfer control unit 25 determines whether an abnormality notification that a physical link is failed is received from the bypass port eth3 or not (S212). If an abnormality notification is not received (No in S212), the data transfer control unit 25 waits until the reception thereof.

If an abnormality notification is received (Yes in S212), the data transfer control unit 25 permits the data transfer unit 27 to transfer data (S214). In other words, the data transfer control unit 25 causes the data transfer unit 27 to transfer communication data received by the bypass port eth3 to the port eth0.

Then, the data transfer control unit 25 determines whether a recovery notification that a physical link is not failed is received from the bypass port eth3 or not (S216). If a recovery notification is not received (No in S216), the data transfer control unit 25 waits until the reception thereof.

If a recovery notification is received (Yes in S216), the data transfer control unit 25 causes the data transfer unit 27 to stop the data transfer (S218). In other words, the data transfer control unit 25 causes the data transfer unit 27 not to transfer communication data received by the bypass port eth3 to the port eth0.

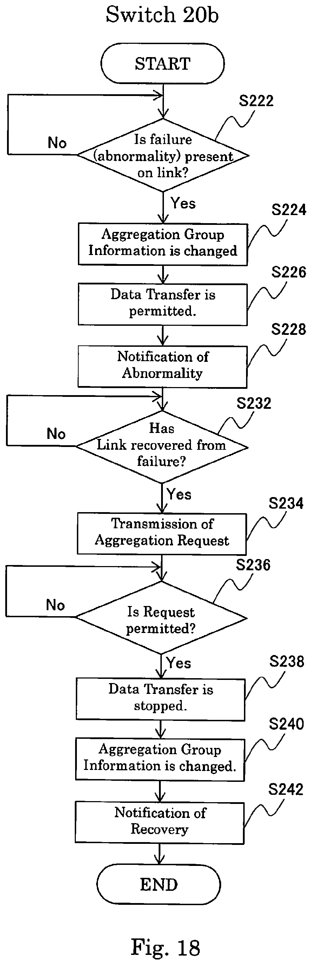

FIG. 18 is a flowchart showing an operation of the switch 20b according to the second embodiment.

First, the link state determination unit 210 determines whether a failure (abnormality) is present on the link to which the port eth0 is connected or not (S222). If there is not abnormality (No in S222), the link state determination unit 210 waits until an occurrence of abnormality.

If the link state determination unit 210 detects a failure (abnormality) of the link (Yes in S222), the aggregation information setting unit 22 changes the aggregation group information (S224). In other words, the aggregation information setting unit 22 deletes the port identifier eth0 representing the failed port from the aggregation information (refer to FIG. 6) recorded in the aggregation group information recording unit 24, and adds the port identifier eth3 representing the bypass port.

Further, the data transfer control unit 214 permits the data transfer unit 216 to transfer data (S226). In other words, the data transfer control unit 214 causes the data transfer unit 216 to transfer the communication data received by all the ports eth1 other than the failed port eth0 and the bypass port eth3 to the bypass port eth3.

Moreover, the state notification unit 218 transmits the determination of the presence of a failure made by the link state determination unit 210 along with the group identifier 0x00BB from the bypass port eth3, thereby notifying the switch 20a of the presence of the abnormality on the link (S228).

On this occasion, the link state determination unit 210 determines whether the failure on the link is not present (the link has recovered from the failure) or not (S232). If the failure of the link is present (No in S232), the link state determination unit 210 waits until determination that the link is not failed (namely, the link has recovered from the failure) is made. If the link state determination unit 210 determines that the link has recovered from the failure (Yes in S232), the transmission of the aggregation request to the server 10 is carried out (S234). The transmission of the aggregation request (S234) is the same as that of the first embodiment, and a description thereof is therefore omitted (refer to S20 in FIG. 8).

Then, whether the permission for the aggregation request is received from the server 10 or not is determined (S236). If the permission is not received (No in S236), the permission is waited for until reception. When the permission for the aggregation request is received from the server 10 (Yes in S236), the data transfer control unit 214 causes the data transfer unit 216 to stop the transfer of the communication data (S238).

Further, the aggregation information setting unit 22 deletes the port identifier eth3 representing the bypass port from the aggregation information recorded in the aggregation group information recording unit 24, and adds the port identifier eth0 representing the failed port (S240). As a result, the aggregation information returns to the information shown in FIG. 6.

Moreover, the state notification unit 218 transmits the determination of the absence of a failure made by the link state determination unit 210 along with the group identifier 0x00BB from the bypass port eth3, thereby notifying the switch 20a of the absence of a failure on the link (recovery from the failure) (S242).

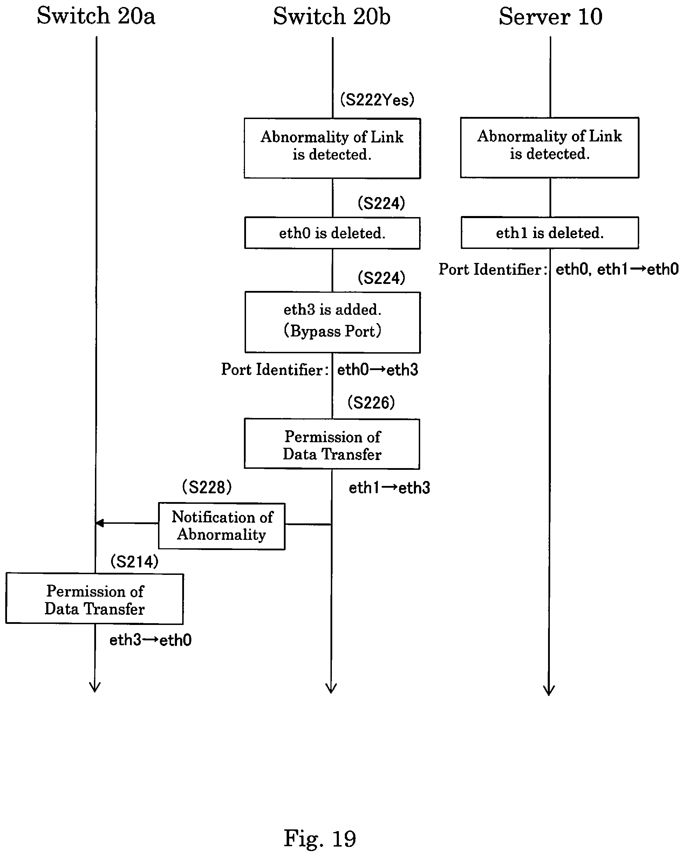

FIG. 19 is a flowchart showing operations of the switch 20a, the switch 20b, and the server 10 according to the second embodiment (when a failure occurs on the physical link).

First, the link state determination unit 210 of the switch 20b detects a failure (abnormality) of the link to which the port etho is connected (Yes in S222). Then, the aggregation information setting unit 22 deletes the port identifier etho representing the failed port from the aggregation information (refer to FIG. 6) recorded in the aggregation group information recording unit 24 (S224), and moreover adds the port identifier eth3 representing the bypass port (S224). Further, the data transfer control unit 214 permits the data transfer unit 216 to transfer data (from the port eth1 to the bypass port eth3) (S226). Moreover, the state notification unit 218 transmits the determination of the presence of a failure made by the link state determination unit 210 along with the group identifier 0x00BB from the bypass port eth3, thereby notifying the switch 20a of the presence of the abnormality on the link (S228).

When the data transfer control unit 25 of the switch 20a receives the abnormality notification, the data transfer control unit 25 permits the data transfer unit 27 to transfer data (from the bypass port eth3 to the port eth0) (S214).

When the server 10 detects an abnormality of the link, the server 10 deletes the port eth1 connected to the link from the aggregation information (refer to FIG. 3(b)) recorded in the aggregation group information recording unit 14. The aggregation information after the deletion is brought into the state shown in FIG. 3(a).

As a result of this configuration, as shown in FIG. 13, the data to be transmitted from the server 30 via the switch 20b to the server 10 is transmitted, in place of the physical link (failed) connecting the port eth0 of the switch 20b and the port eth1 of the server 10 with each other, via the physical link connecting the bypass ports eth3 with each other, further via the switch 20a to the server 10.

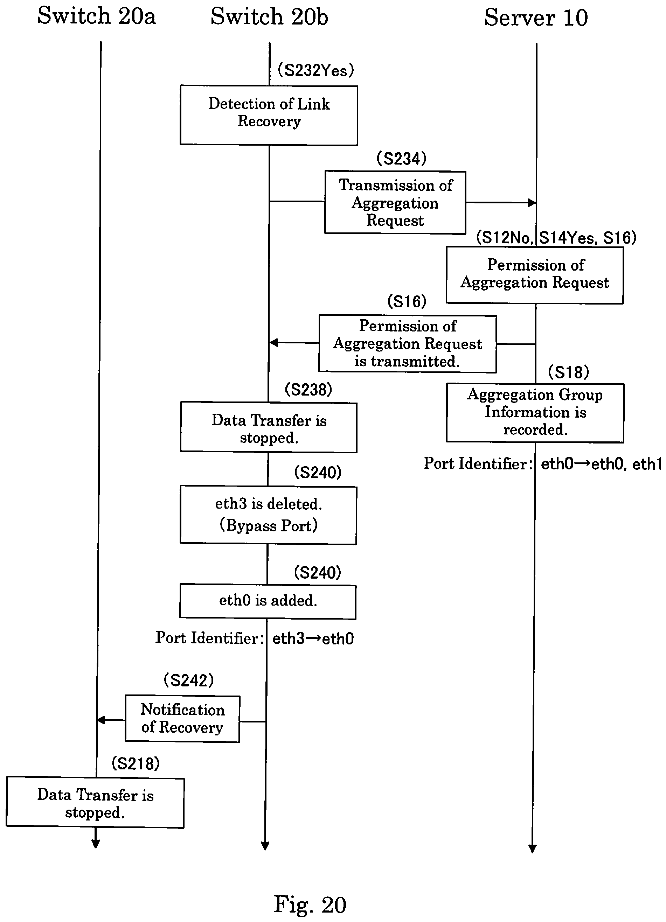

FIG. 20 is a flowchart showing operations of the switch 20a, the switch 20b, and the server 10 according to the second embodiment (when the physical link recovers from a failure).

The link state determination unit 210 of the switch 20b detects that the link has recovered from a failure in the state in which the data communication is carried out via the physical link connecting the bypass ports eth3 with each other as shown in FIG. 13 (Yes in S232).

Then, an aggregation request is transmitted from the switch 20b to the server 10 (S234) (as in S20 in FIG. 8). It should be noted that information included in the aggregation request is the same as the content (the system identifier 00:01:02:03:04:05, the aggregation group identifier 0x00BB, and the port identifier 0x0002 (corresponding to ethi) on the opposite side (server 10 side)) of the transmission of the aggregation request from the switch 20b to the server 10 shown in FIG. 9.

The server 10 permits the aggregation request (No in S12 → Yes in S14 → S16 in FIG. 7). In other words, the group identifier oxooBB included in the aggregation request is also recorded in the aggregation group information recording unit 14, and is thus not a first request (No in S12). Moreover, the system identifier 00:01:02:03:04:05 included in the aggregation request is also recorded in the aggregation group information recording unit 14, and the system identifiers are the same (Yes in S14). Then, the aggregation request is permitted (S16).

Then, the server 10 transmits permission for the aggregation request (similarly to S16 in FIG. 7). Further, the server 10 records the aggregation group information (similarly to S18 in FIG. 7). In other words, the server 10 adds the port identifier eth1 to the aggregation group information as shown in FIG. 3(a), thereby obtaining the aggregation group information as shown in FIG. 3(b).

When the switch 20b receives permission for the aggregation request from the server 10, the data transfer control unit 214 causes the data transfer unit 216 to stop the data transfer (from the port eth1 to the bypass port eth3) (S238).

Further, the aggregation information setting unit 22 of the switch 20b deletes the port identifier eth3 representing the bypass port from the aggregation information recorded in the aggregation group information recording unit 24 (S240), and, moreover, adds the port identifier etho representing the failed port (S240). As a result, the aggregation information returns to the information shown in FIG. 6.

Moreover, the state notification unit 218 transmits the determination of the absence of a failure made by the link state determination unit 210 along with the group identifier 0x00BB from the bypass port eth3, thereby notifying the switch 20a of a recovery of the link (S242).

The switch 20a receives the recovery notification, and the data transfer control unit 25 stops the data transfer (from the bypass port eth3 to the port eth0) by the data transfer unit 27 (S218).

As a result of this configuration, the data to be transmitted from the server 30 via the switch 20b to the server 10 is transmitted via the physical link connecting the port eth0 of the switch 20b and the port eth1 of the server 10 with each other to the server 10 as shown in FIG. 14.

According to the second embodiment, even if the link between the switch 20b and the server 10 fails, the bypass ports eth3 enable the data transfer to the server 10.

### Third Embodiment

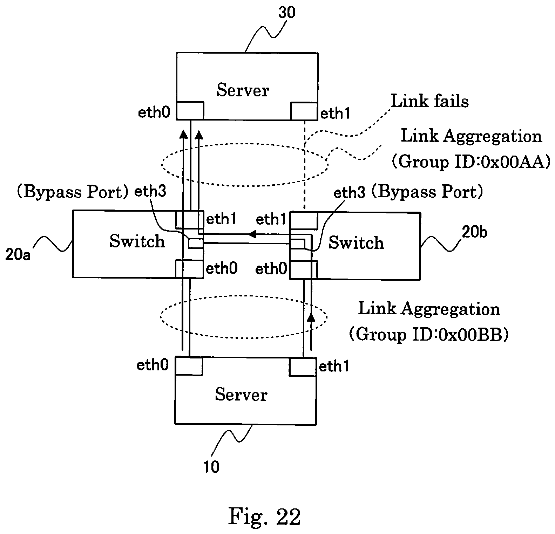

According to a third embodiment, the bypass ports eth3 can be used for the notification of a failure (refer to FIG. 13) on the physical link belonging to the aggregation group represented by the group identifier 0x00BB, as well as a notification of a failure (refer to FIG. 22) on the physical link belonging to the aggregation group represented by the group identifier 0x00AA.

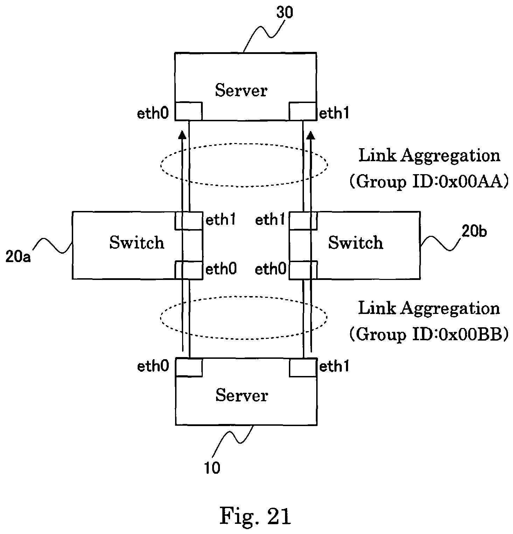

FIG. 21 is a diagram showing a case in which the link aggregation (group identifier: 0x00AA) is also permitted on the server 30 in the network configuration shown in FIG. 10, and data is transmitted from the server 10 to the server 30. It should be noted that the bypass ports eth3 are not shown in FIG. 21. Though the network configuration shown in FIG. 21 is approximately the same as the network configuration shown in FIG. 11, when the server 10 transmits data to the server 30, the network configuration shown in FIG. 21 can divide the data to be transmitted into data via the switch 20a and data via the switch 20b.

On this occasion, the ports eth0 and eth1 other than the bypass port eth3 of the switch 20a belong to the multiple aggregation groups (group identifies: 0x00BB and 0x00AA). In more detail, the port eth0 belongs to the aggregation group (group identifier: 0x00BB) and the port eth1 belongs to the aggregation group (group identifier: 0x00AA). The same holds true for the switch 20b.

FIG. 22 is a diagram showing a network configuration of the switches 20a and 20b according to the third embodiment of the present invention (when a physical link fails). In the following section, the same components are denoted by the same numerals as of the second embodiment, and will be explained in no more details.

The data transmitted from the server 10 via the switch 20b to the server 30 is transmitted, in place of the physical link (belongs to the aggregation group represented by the group identifier 0x00AA, and is failed) connecting the port eth1 of the switch 20b and the port eth1 of the server 30 with each other, via the physical link connecting the bypass ports eth3 with each other, further via the switch 20a to the server 10.

Also in this case, as in the second embodiment, the switch 20b transmits the presence of the failure on the link from the bypass port eth3, and the switch 20a receives the presence of the failure on the link from the bypass port eth3.

In this way, the bypass ports eth3 are used to transmit (receive) determination that a failure is present on the link belonging to any (as described for the aggregation group represented by the group identifier 0x00BB in the second embodiment, and for the aggregation group represented by the group identifier 0x00AA in the third embodiment) of the multiple aggregation groups (group identifiers: 0x00BB and 0x00AA).

The bypass ports eth3 are not used only for transmission (reception) of determination that a failure is present on the link belonging to the aggregation group represented by the group identifier 0x00BB (second embodiment), and, if a failure is not present on the link belonging to the aggregation group represented by the group identifier 0x00BB, the bypass ports eth3 are (released from the aggregation group represented by the group identifier 0x00BB) also used for transmission (reception) of determination that a failure is present on the link belonging to the aggregation group represented by the group identifier 0x00AA (third embodiment).

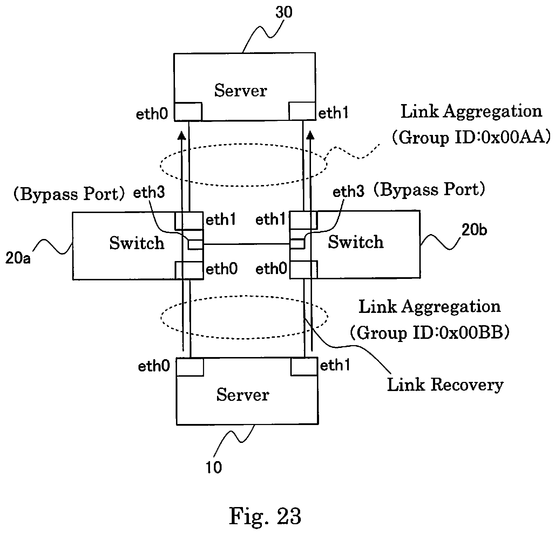

FIG. 23 is a diagram showing a network configuration of the switches 20a and 20b according to the third embodiment of the present invention (when the physical link recovers from a failure).

When the physical link connecting the port eth1 of the switch 20b and the port eth1 of the server 30 with each other recovers from the failure, the use of the physical link connecting the bypass ports eth3 with each other is stopped. The data to be transmitted from the server 30 via the switch 20b to the server 10 is transmitted via the physical link connecting between the port eth1 of the switch 20b and the port eth1 of the server 10 to the server 10.

Also in this case, as in the second embodiment, the switch 20b transmits the absence of the failure on the link from the bypass port eth3, and the switch 20a receives the absence of the failure on the link from the bypass port eth3.

In this way, the bypass ports eth3 are used to transmit (receive) determination that a failure is absent on the link belonging to, out of the multiple aggregation groups (group identifiers: 0x00BB and 0x00AA), any aggregation group (as described for the aggregation group represented by the group identifier 0x00BB in the second embodiment, and for the aggregation group represented by the group identifier 0x00AA in the third embodiment).

The bypass ports eth3 are not used only for transmission (reception) of determination that a failure is absent (recovery) on the link belonging to the aggregation group represented by the group identifier 0x00BB (second embodiment), and, if a failure is originally absent on the link belonging to the aggregation group represented by the group identifier 0x00BB, the bypass ports eth3 are (released from the aggregation group represented by the group identifier 0x00BB) also used for transmission (reception) of determination that a failure is absent (recovery) on the link belonging to the aggregation group represented by the group identifier 0x00AA (third embodiment).

Moreover, the above-described embodiments may be realized in the following manner. A computer is provided with a CPU, a hard disk, and a media (such as a floppy disk (registered trade mark) and a CD-ROM) reader, and the media reader is caused to read a medium recording a program realizing the above-described respective components such as the respective components of the switches 20a and 20b, thereby installing the program on the hard disk. This method may also realize the above-described functions.

## Claims

1. A switch (20b) for transmitting a Link Aggregation Control Protocol, LACP, frame to a network device (10) via a first link, wherein:
another switch (20a) is adapted to transmit another LACP frame to the network device (10) via a second link;
the LACP frame and the other LACP frame serve to request link aggregation from the network device (10);
a system identifier of the LACP frame is the same as the system identifier of the other LACP frame;
the first link and the second link are connected to the network device (10); data is transmitted from the network device (10) via both the first link and the second link;
the switch (20b) comprising an aggregation information setting unit (22) adapted to receive a notification that the aggregation request by the LACP frame is permitted from the network device (10), and to set aggregation information, wherein the aggregation information includes a system identifier, an aggregation group identifier, and a port identifier; wherein:
a bypass port (eth3) of the switch (20b) is connected to a bypass port (eth3) of the other switch (20a);
the switch (20b) includes:
a link state determination unit (210) adapted to determine presence/absence of a failure on a link to which a port represented by the port identifier is connected,
a data transfer unit (216), if the link state determination unit (210) determines presence of a failure, being adapted to transfer communication data received by all the ports other than the failed port (eth0) connected to the link which is determined to be failed and the bypass port (eth3), to the bypass port (eth3), and
a state notification unit (218) being adapted to transmit from the bypass port (eth3) the determination of the presence of the failure made by the link state determination unit (210); and
the aggregation information setting unit (22) being adapted to delete the port identifier representing the failed port (eth0) from the aggregation information, and to add a port identifier representing the bypass port (eth3); **characterized by:** if the link state determination unit (210) determines presence of the failure, and then determines absence of the failure:
the data transfer unit (216) is adapted to stop the transfer of the communication data;
the state notification unit (218) is adapted to transmit the determination of the absence of the failure from the bypass port (eth3); and
the aggregation information setting unit (22) is adapted to delete the port identifier representing the bypass port (eth3) from the aggregation information, and to add the port identifier representing the port (eth0) of the link failure that has recovered.

2. A switch (20a) for transmitting a Link Aggregation Control Protocol, LACP, frame to a network device (10) via a first link, wherein:
another switch (20b) is adapted to transmit another LACP frame to the network device (10) via a second link;
the LACP frame and the other LACP frame serve to request link aggregation from the network device (10);
a system identifier of the LACP frame is the same as the system identifier of the other LACP frame;
the first link and the second link are connected to the network device (10);
data is transmitted from the network device (10) via both the first link and the second link;
the switch (20a) comprising an aggregation information setting unit (22) adapted to receive a notification that the aggregation request by the LACP frame is permitted from the network device (10), and to set aggregation information, wherein the aggregation information includes a system identifier, an aggregation group identifier, and a port identifier; wherein
a bypass port (eth3) of the switch (20a) is connected to a bypass port (eth3) of the other switch (20b), comprising a data transfer unit (27) being adapted to receive determination of presence of a failure from the bypass port (eth3), and being adapted to transfer communication data received by the bypass port (eth3) to the port represented by the port identifier included in the aggregation information; **characterized by:**
if determination of absence of the failure is received from the bypass port (eth3),
the data transfer unit (27) is adapted to stop said transfer of communication data.

3. The switch (20b) according to claim 1, wherein:
a port other than the bypass port (eth3) belongs to a plurality of aggregation groups; and
the bypass port (eth3) is used to transmit determination of absence of a failure on a link belonging to any of the plurality of aggregation groups.

4. The switch (20a) according to claim 2, wherein:
a port other than the bypass port (eth3) belongs to a plurality of aggregation groups; and
the bypass port (eth3) is used to receive determination of absence of a failure on a link belonging to any of the plurality of aggregation groups.

5. A transmission method for transmitting a Link Aggregation Control Protocol, LACP, frame to a network device (10) via a first link by using a switch (20b), wherein:
another switch (20a) transmits another LACP frame to the network device (10) via a second link;
the LACP frame and the other LACP frame serve to request link aggregation from the network device (10);
a system identifier of the LACP frame is the same as the system identifier of the other LACP frame
the first link and the second link are connected to the common network device (10); and
data is transmitted from the network device (10) via both the first link and the second link;
the transmission method comprising an aggregation information setting step that receives a notification that the aggregation request by the LACP frame is permitted from the network device (10), and sets aggregation information, wherein the aggregation information includes a system identifier, an aggregation group identifier, and a port identifier; wherein:
a bypass port (eth3) of the switch (20b) is connected to a bypass port (eth3) of the other switch (20a);
the transmission method includes:
a link state determination step that determines presence/absence of a failure on a link to which a port represented by the port identifier is connected,
a data transfer step, if the link state determination step determines presence of a failure, transfers communication data received by all the ports other than the failed port (etho) connected to the link which is determined to be failed and the bypass port (eth3), to the bypass port (eth3), and
a state notification step that transmits from the bypass port (eth3) the determination of the presence of the failure made by the link state determination step; and
the aggregation information setting step deletes the port identifier representing the failed port (etho) from the aggregation information, and adds a port identifier representing the bypass port (eth3); **characterized by:**
if the link state determination step determines presence of the failure, and then determines absence of the failure:
the transfer of the communication data by the data transfer step is stopped;
the state notification step transmits the determination of the absence of the failure from the bypass port (eth3); and
the aggregation information setting step deletes the port identifier representing the bypass port (eth3) from the aggregation information, and adds the port identifier representing the port (eth0) of the link failure that has recovered.

6. A transmission method for transmitting a Link Aggregation Control Protocol, LACP, frame to a network device (10) via a first link by using a switch (20a), wherein:
another switch (20b) transmits another LACP frame to the network device (10) via a second link;
the LACP frame and the other LACP frame serve to request link aggregation from the network device (10);
a system identifier of the LACP frame is the same as the system identifier of the other LACP frame
the first link and the second link are connected to the common network device (10); and
data is transmitted from the network device (10) via both the first link and the second link;
the transmission method comprising an aggregation information setting step that receives a notification that the aggregation request by the LACP frame is permitted from the network device (10), and sets aggregation information, wherein the aggregation information includes a system identifier, an aggregation group identifier, and a port identifier; wherein
a bypass port (eth3) of the switch (20a) is connected to a bypass port (eth3) of the other switch (20b), the transmission method further comprising a data transfer step that receives determination of presence of a failure from the bypass port (eth3), and transfers communication data received by the bypass port (eth3) to the port represented by the port identifier included in the aggregation information;
**characterized by:** if determination of absence of the failure is received from the bypass port (eth3), said transfer of the communication data by the data transfer step is stopped.

7. A program of instructions for execution by a computer to perform a process for transmitting an LACP frame to a network device (10) via a first link according to claim 5.

8. A computer-readable medium having a program of instructions for execution by a computer to perform a process for transmitting an LACP frame to a network device (10) via a first link according to claim 7.

9. A program of instructions for execution by a computer to perform a process for transmitting an LACP frame to a network device (10) via a first link according to claim 6.

10. A computer-readable medium having a program of instructions for execution by a computer to perform a process for transmitting an LACP frame to a network device (10) via a first link according to claim 9.

## Patentansprüche

1. Schalter (20b) zum Übertragen eines Kanalbündelungs-Steuerprotokoll, LACP, Rahmens an eine Netzwerkvorrichtung (10) über einen ersten Kanal, wobei:
ein anderer Schalter (20a) eingerichtet ist, einen anderen LACP Rahmen an die Netzwerkvorrichtung (10) über einen zweiten Kanal zu übertragen;
der LACP Rahmen und der andere LACP Rahmen dazu dienen, eine Kanalbündelung von der Netzwerkvorrichtung (10) anzufragen;
ein Systembezeichner des LACP Rahmens der gleiche ist wie der Systembezeichner des anderen LACP Rahmens;
der erste Kanal und der zweite Kanal mit der Netzwerkvorrichtung (10) verbunden sind;
Daten von der Netzwerkvorrichtung (10) über beide, den ersten Kanal und den zweiten Kanal, übertragen werden;
der Schalter (20b), der eine Bündelungsinformationssetzeinheit (22) aufweist, eingerichtet ist, eine Benachrichtigung zu empfangen, dass die Bündelungsanfrage durch den LACP Rahmen von der Netzwerkvorrichtung (10) erlaubt wurde, und die Bündelungsinformation zu setzen, wobei
die Bündelungsinformation einen Systembezeichner, einen Bündelungsgruppenbezeichner, und einen Anschlussbezeichner umfasst; wobei:
ein Umgehungsanschluss (eth3) des Schalters (20b) mit einem Umgehungsanschluss (eth3) des anderen Schalters (20a) verbunden ist;
der Schalter (20b) umfasst:
eine Kanalzustandsbestimmungseinheit (210), die eingerichtet ist, die Anwesenheit/Abwesenheit eines Fehlers in einem Kanal zu bestimmen, zu welchem ein Anschluss verbunden ist, der durch den Anschlussbezeichner repräsentiert wird,
eine Datentransfereinheit (216) die, wenn die Kanalzustandsbestimmungseinheit (210) die Anwesenheit eines Fehlers bestimmt, eingerichtet ist Kommunikationsdaten, die von allen Anschlüssen außer dem defekten Anschluss (etho), der mit dem Kanal verbunden ist, der als defekt bestimmt wurde und dem Umgehungsanschluss (eth3), an den Umgehungsanschluss (eth3) zu übertragen, und
eine Zustandsbenachrichtigungseinheit (218), die eingerichtet ist, von dem Umgehungsanschluss (eth3) die Bestimmung der Anwesenheit des Fehlers, die durch die Kanalzustandsbestimmungseinheit (210) gemacht wurde, zu übertragen; und
die Bündelungsinformationssetzeinheit (22), die eingerichtet ist, den Anschlussbezeichner, der den defekten Anschluss (etho) repräsentiert, aus der Bündelungsinformation zu löschen, und einen Anschlussbezeichner, der den Umgehungsanschluss (eth3) repräsentiert, hinzuzufügen; **gekennzeichnet durch**:
wenn die Kanalzustandsbestimmungseinheit (210) die Anwesenheit des Fehlers bestimmt, und dann die Abwesenheit des Fehlers bestimmt:
die Datentransfereinheit (216) eingerichtet ist, die Übertragung der Kommunikationsdaten zu stoppen;
die Zustandsbenachrichtigungseinheit (218) eingerichtet ist, die Bestimmung der Abwesenheit des Fehlers von dem Umgehungsanschluss (eth3) zu übertragen; und
die Bündelungsinformationssetzeinheit (22) eingerichtet ist, den Anschlussbezeichner, der den Umgehungsanschluss (eth3) repräsentiert, aus der Bündelungsinformation zu löschen, und den Anschlussbezeichner, der den Anschluss (etho) des Kanalfehlers der wieder behoben wurde, hinzuzufügen.

2. Schalter (20a) zum Übertragen eines Kanalbündelungs-Steuerprotokoll-, LACP, Rahmens an eine Netzwerkvorrichtung (10) über einen ersten Kanal, wobei:
ein anderer Schalter (20b) eingerichtet ist, einen anderen LACP Rahmen an die Netzwerkvorrichtung (10) über einen zweiten Kanal zu übertragen;
der LACP Rahmen und der andere LACP Rahmen dazu dienen, eine Kanalbündelung von der Netzwerkvorrichtung (10) anzufragen;
ein Systembezeichner des LACP Rahmens der gleiche ist wie der Systembezeichner des anderen LACP Rahmens;
der erste Kanal und der zweite Kanal mit der Netzwerkvorrichtung (10) verbunden sind;
Daten von der Netzwerkvorrichtung (10) über beide, den ersten Kanal und den zweiten Kanal, übertragen werden;
der Schalter (20a), der eine Bündelungsinformationssetzeinheit (22) aufweist, eingerichtet ist, eine Benachrichtigung zu empfangen, dass die Bündelungsanfrage durch den LACP Rahmen von der Netzwerkvorrichtung (10) erlaubt wurde, und Bündelungsinformationen zu setzen, wobei die Bündelungsinformationen einen Systembezeichner, einen Bündelungsgruppenbezeichner, und einen Anschlussbezeichner umfassen; wobei
ein Umgehungsanschluss (eth3) des Schalters (20a) mit einem Umgehungsanschluss (eth3) des anderen Schalters (20b) verbunden ist, aufweisend eine Datentransfereinheit (27), die eingerichtet ist, eine Bestimmung einer Anwesenheit eines Fehlers von dem Umgehungsanschluss (eth3) zu empfangen, und die eingerichtet ist, Kommunikationsdaten, die von dem Umgehungsanschluss (eth3) empfangen wurden, an den Anschluss zu übertragen, der durch den Anschlussbezeichner repräsentiert wird, der in der Bündelungsinformation beinhaltet ist; **gekennzeichnet durch**:
wenn eine Bestimmung einer Abwesenheit des Fehlers von dem Umgehungsanschluss (eth3) empfangen wird, die Datentransfereinheit (27) eingerichtet ist, die Übertragung von Kommunikationsdaten zu stoppen.

3. Schalter (20b) nach Anspruch 1, wobei:
ein anderer Anschluss als der Umgehungsanschluss (eth3) zu einer Vielzahl von Bündelungsgruppen gehört; und
der Umgehungsanschluss (eth3) verwendet wird, die Bestimmung einer Abwesenheit eines Fehlers in einem Kanal, der zu jeder der Vielzahl von Bündelungsgruppen gehört, zu übertragen.

4. Schalter (20a) nach Anspruch 2, wobei:
ein anderer Anschluss als der Umgehungsanschluss (eth3) zu einer Vielzahl von Bündelungsgruppen gehört; und
der Umgehungsanschluss (eth3) verwendet wird, um die Bestimmung einer Abwesenheit eines Fehlers in einem Kanal, der zu jeder der Vielzahl von Bündelungsgruppen gehört, zu empfangen.

5. Übertragungsverfahren zum Übertragen eines Kanalbündelungs-Steuerungsprotokoll-, LACP, Rahmens an eine Netzwerkvorrichtung (10) über einen ersten Kanal durch Verwendung eines Schalters (20b), wobei:
ein anderer Schalter (20a) einen anderen LACP Rahmen an die Netzwerkvorrichtung (10) über einen zweiten Kanal überträgt;
der LACP Rahmen und der andere LACP Rahmen dazu dienen, eine Kanalbündelung von der Netzwerkvorrichtung (10) anzufragen;
ein Systembezeichner des LACP Rahmens der gleiche ist wie der Systembezeichner des anderen LACP Rahmens,
der erste Kanal und der zweite Kanal mit der gemeinsamen Netzwerkvorrichtung (10) verbunden sind; und
Daten von der Netzwerkvorrichtung (10) über beide, den ersten Kanal und den zweiten Kanal, übertragen werden;
das Übertragungsverfahren einen Bündelungsinformationssetzschritt aufweist, der eine Benachrichtigung empfängt, dass die Bündelungsanfrage durch den LACP Rahmen von der Netzwerkvorrichtung (10) erlaubt wurde, und Bündelungsinformationen setzt, wobei die Bündelungsinformationen einen Systembezeichner, einen Bündelungsgruppenbezeichner, und einen Anschlussbezeichner umfassen; wobei:
ein Umgehungsanschluss (eth3) des Schalters (20b) mit einem Umgehungsanschluss (eth3) des anderen Schalters (20a) verbunden ist;
das Übertragungsverfahren umfasst:
einen Kanalzustandsbestimmungsschritt, der die Anwesenheit/Abwesenheit eines Fehlers in einem Kanal bestimmt, zu welchem ein Anschluss verbunden ist, der durch den Anschlussbezeichner repräsentiert wird,
einen Datentransferschritt der, wenn der Kanalzustandsbestimmungsschritt die Anwesenheit eines Fehlers bestimmt, die Kommunikationsdaten, die von allen anderen Anschlüssen außer dem defekten Anschluss (etho), der mit dem Kanal verbunden ist, der als defekt bestimmt wurde und dem Umgehungsanschluss (eth3), an den Umgehungsanschluss (eth3) überträgt, und
ein Zustandsbenachrichtigungsschritt, der von dem Umgehungsanschluss (eth3) die Bestimmung der Anwesenheit des Fehlers, die durch den Kanalzustandsbestimmungsschritt gemacht wurde, überträgt; und
der Bündelungsinformationssetzschritt den Anschlussbezeichner, der den defekten Anschluss (etho) repräsentiert, von der Bündelungsinformation löscht, und einen Anschlussbezeichner hinzufügt, der den Umgehungsanschluss (eth3) repräsentiert; **gekennzeichnet durch**:
wenn der Kanalzustandsbestimmungsschritt die Anwesenheit des Fehlers bestimmt, und dann die Abwesenheit des Fehlers bestimmt:
die Übertragung der Kommunikationsdaten durch den Datentransferschritt gestoppt wird;
der Zustandsbenachrichtigungsschritt die Bestimmung der Abwesenheit des Fehlers von dem Umgehungsanschluss (eth3) überträgt; und
der Bündelungsinformationensetzschritt den Anschlussbezeichner, der den Umgehungsanschluss (eth3) repräsentiert, von der Bündelungsinformation löscht, und den Anschlussbezeichner hinzufügt, der den Anschluss (etho) des defekten Kanals der wiederhergestellt wurde, repräsentiert.

6. Übertragungsverfahren zum Übertragen eines Kanalbündelungs-Steuerungsprotokoll-, LACP, Rahmens an eine Netzwerkvorrichtung (10) über einen ersten Kanal durch Verwendung eines Schalters (20a), wobei:
ein anderer Schalter (20b) einen anderen LACP Rahmen an die Netzwerkvorrichtung (10) über einen zweiten Kanal überträgt;
der LACP Rahmen und der andere LACP Rahmen dazu dienen, eine Kanalbündelung von der Netzwerkvorrichtung (10) anzufragen;
ein Systembezeichner des LACP Rahmens der gleiche ist, wie der Systembezeichner des anderen LACP Rahmens,
der erste Kanal und der zweite Kanal mit der gemeinsamen Netzwerkvorrichtung (10) verbunden sind; und
Daten von der Netzwerkvorrichtung (10) über beide, den ersten Kanal und den zweiten Kanal, übertragen werden;
das Übertragungsverfahren einen Bündelungsinformationssetzschritt aufweist, der eine Benachrichtigung empfängt, dass die Bündelungsanfrage durch den LACP Rahmen von der Netzwerkvorrichtung (10) erlaubt wurde, und Bündelungsinformationen setzt, wobei die Bündelungsinformationen einen Systembezeichner, einen Bündelungsgruppenbezeichner, und einen Anschlussbezeichner umfassen; wobei
ein Umgehungsanschluss (eth3) des Schalters (20a) mit einem Umgehungsanschluss (eth3) des anderen Schalters (20b) verbunden ist; das Übertragungsverfahren weiterhin einen Datentransferschritt aufweist, der die Bestimmung der Anwesenheit eines Fehlers von dem Umgehungsanschluss (eth3) empfängt, und Kommunikationsdaten, die von dem Umgehungsanschluss (eth3) empfangen wurden, an den Anschluss überträgt, der durch den Anschlussbezeichner repräsentiert ist, der in der Bündelungsinformation beinhaltet ist; **gekennzeichnet durch**:
wenn eine Bestimmung einer Abwesenheit des Fehlers von dem Umgehungsanschluss (eth3) empfangen wurde, die Übertragung der Kommunikationsdaten durch den Datentransferschritt gestoppt wird.

7. Programm von Anweisungen zur Ausführung durch einen Computer, um einen Prozess durchzuführen, zum Übertragen eines LACP Rahmens an eine Netzwerkvorrichtung (10) über einen ersten Kanal nach Anspruch 5.

8. Computer-lesbares Medium, das ein Programm von Anweisungen aufweist, zur Ausführung durch einen Computer, um einen Prozess durchzuführen, zum Übertragen eines LACP Rahmens an eine Netzwerkvorrichtung (10) über einen ersten Kanal nach Anspruch 7.

9. Programm von Anweisungen zum Ausführen durch einen Computer, zum Durchführen eines Prozesses, zum Übertragen eines LACP Rahmens an eine Netzwerkvorrichtung (10) über einen ersten Kanal nach Anspruch 6.

10. Computer-lesbares Medium, das ein Programm von Anweisungen aufweist, zur Ausführung durch einen Computer, um einen Prozess durchzuführen, zum Übertragen eines LACP Rahmens an eine Netzwerkvorrichtung (10) über einen ersten Kanal nach Anspruch 9.

## Revendications

1. Un commutateur (20b) pour la transmission d'une trame en protocole de contrôle à agrégation de liaisons, LACP, à un dispositif de réseau (10) via une première liaison, dans lequel :
un autre commutateur (20a) est apte à transmettre une autre trame LACP au dispositif réseau (10) via une seconde liaison ;
la trame LACP et l'autre trame LACP servent à requérir une agrégation de liaisons auprès du dispositif réseau (10) ;
un identifiant système de la trame LACP est le même que l'identifiant système de l'autre trame LACP ;
la première liaison et la seconde liaison sont connectées au dispositif réseau (10) ;
des données sont transmises à partir du dispositif réseau (10) via à la fois la première liaison et la seconde liaison ;
le commutateur (20b) comprend une unité de paramétrage d'informations d'agrégation (22) apte à recevoir une notification selon laquelle la requête d'agrégation par la trame LACP est autorisée en provenance du dispositif du réseau, et pour paramétrer les informations d'agrégation, les informations d'agrégation comprenant un identifiant système, un identifiant de groupe d'agrégation et un identifiant de port ; dans lequel :
un port de contournement (eth3) du commutateur (20b) est connecté à un port de contournement (eth3) de l'autre commutateur (20a) ;
le commutateur (20b) comprend :
une unité de détermination d'état de liaison (210) apte à déterminer la présence/l'absence d'une défaillance sur une liaison à laquelle est connecté un port représenté par l'identifiant de port,
une unité de transfert de données (216) qui est apte, si l'unité de détermination d'état de liaison (210) détermine la présence d'une défaillance, à transférer les données de communication reçues par tous les ports autres que le port défaillant (etho) connecté à la liaison qui est déterminée comme étant défaillante et le port de contournement (eth3), vers le port de contournement (eth3), et
une unité de notification d'état (218) qui est apte à transmettre depuis le port de contournement (eth3) la détermination de la présence de la défaillance constatée par l'unité de détermination d'état de liaison (210) ; et
l'unité de paramétrage des informations d'agrégation (22) étant apte à effacer de l'information d'agrégation l'identifiant de port représentant le port défaillant (etho), et à ajouter un identifiant de port représentant le port de contournement (eth3) ;
**caractérisé par le fait que** :
si l'unité de détermination d'état de liaison (210) détermine la présence de la défaillance, et détermine ensuite l'absence de la défaillance :
l'unité de transfert de données (216) est apte à arrêter le transfert des données de communication ;
l'unité de notification d'état (218) est apte à transmettre la détermination de l'absence de la défaillance à partir du port de contournement (eth3) ; et
l'unité de paramétrage des informations d'agrégation (22) est apte à effacer l'identifiant de port représentant le port de contournement (eth3) de l'information d'agrégation, et à ajouter l'identifiant de port représentant le port (etho) de la liaison défaillante qui a été restaurée.

2. Un commutateur (20a) pour la transmission d'une trame en protocole de contrôle à agrégation de liaisons, LACP, à un dispositif de réseau (10) via une première liaison, dans lequel :
un autre commutateur (20b) est apte à transmettre une autre trame LACP au dispositif réseau (10) via une seconde liaison ;
la trame LACP et l'autre trame LACP servent à requérir une agrégation de liaisons auprès du dispositif réseau (10) ;
un identifiant système de la trame LACP est le même que l'identifiant système de l'autre trame LACP ;
la première liaison et la seconde liaison sont connectées au dispositif réseau (10) ;
des données sont transmises à partir du dispositif réseau (10) via à la fois la première liaison et la seconde liaison ;
le commutateur (20a) comprend une unité de paramétrage d'informations d'agrégation (22) apte à recevoir une notification selon laquelle la requête d'agrégation par la trame LACP est autorisée en provenance du dispositif du réseau, et pour paramétrer les informations d'agrégation, les informations d'agrégation comprenant un identifiant système, un identifiant de groupe d'agrégation et un identifiant de port ;
dans lequel un port de contournement (eth3) du commutateur (20a) est connecté à un port de contournement (eth3) de l'autre commutateur (20b), comprenant une unité de transfert de données (27) qui est apte à recevoir en provenance du port de contournement (eth3) une détermination de la présence d'une défaillance, et qui est apte à transférer les données de communication reçues par le port de contournement (eth3) au port représenté par l'identifiant de port inclus dans les informations d'agrégation ;
**caractérisé par le fait que** :
si une détermination d'absence de la défaillance est reçue en provenance du port de contournement (eth3), l'unité de transfert de données (27) est apte à arrêter ledit transfert de données de communication.

3. Le commutateur (20b) selon la revendication 1, dans lequel :
un port autre que le port de contournement (eth3) appartient à une pluralité de groupes d'agrégation ; et
le port de contournement (eth3) est utilisé pour transmettre une détermination d'absence d'une défaillance sur une liaison appartenant à l'un des groupes de la pluralité de groupes d'agrégation.

4. Le commutateur (20a) selon la revendication 2, dans lequel :
un port autre que le port de contournement (eth3) appartient à une pluralité de groupes d'agrégation ; et
le port d'agrégation (eth3) est utilisé pour recevoir une détermination d'absence d'une défaillance sur une liaison appartenant à l'un des groupes de la pluralité de groupes d'agrégation.

5. Un procédé de transmission, pour la transmission d'une trame en protocole de contrôle à agrégation de liaisons, LACP, à un dispositif de réseau (10) via une première liaison par utilisation d'un commutateur (20b), dans lequel :
un autre commutateur (20a) transmet une autre trame LACP au dispositif réseau (10) via une seconde liaison ;
la trame LACP et l'autre trame LACP servent à requérir une agrégation de liaisons auprès du dispositif réseau (10) ;
un identifiant système de la trame LACP est le même que l'identifiant système de l'autre trame LACP ;
la première liaison et la seconde liaison sont connectées au dispositif réseau commun (10) ; et
des données sont transmises à partir du dispositif réseau (10) via à la fois la première liaison et la seconde liaison ;
le procédé de transmission comprenant une étape de paramétrage d'informations d'agrégation qui reçoit une notification selon laquelle la requête d'agrégation par la trame LACP est autorisée en provenance du dispositif du réseau, et paramètre les informations d'agrégation, les informations d'agrégation comprenant un identifiant système, un identifiant de groupe d'agrégation et un identifiant de port ; dans lequel un port de contournement (eth3) du commutateur (20b) est connecté à un port de contournement (eth3) de l'autre commutateur (20a) ;
le procédé de transmission comprend :
une étape de détermination d'état de liaison qui détermine la présence/l'absence d'une défaillance sur une liaison à laquelle est connecté un port représenté par l'identifiant de port,
une étape de transfert de données qui, si l'étape de détermination d'état de liaison détermine la présence d'une défaillance, transfère les données de communication reçues par tous les ports autres que le port défaillant (etho) connecté à la liaison qui est déterminée comme étant défaillante et le port de contournement (eth3),
vers le port de contournement (eth3), et
une étape de notification d'état qui transmet depuis le port de contournement (eth3) la détermination de la présence de la défaillance constatée par l'étape de détermination d'état de liaison ; et
l'étape de paramétrage des informations d'agrégation efface de l'information d'agrégation l'identifiant de port représentant le port défaillant (etho), et à ajouter un identifiant de port représentant le port de contournement (eth3) ;
**caractérisé par le fait que** :
si l'étape de détermination d'état de liaison détermine la présence de la défaillance, et détermine ensuite l'absence de la défaillance :
le transfert des données de communication par l'étape de transfert de données est arrêté ;
l'étape de notification d'état transmet la détermination de l'absence de la défaillance à partir du port de contournement (eth3) ; et
l'étape de paramétrage des informations d'agrégation (22) efface de l'information d'agrégation l'identifiant de port représentant le port de contournement (eth3), et ajoute l'identifiant de port représentant le port (etho) de la liaison défaillante qui a été restaurée.

6. Un procédé de transmission pour la transmission d'une trame en protocole de contrôle à agrégation de liaisons, LACP, à un dispositif de réseau (10) via une première liaison par utilisation d'un commutateur (20a), dans lequel :
un autre commutateur (20b) transmet une autre trame LACP au dispositif réseau (10) via une seconde liaison ;
la trame LACP et l'autre trame LACP servent à requérir une agrégation de liaisons auprès du dispositif réseau (10) ;
un identifiant système de la trame LACP est le même que l'identifiant système de l'autre trame LACP ;
la première liaison et la seconde liaison sont connectées au dispositif réseau commun (10) ; et
des données sont transmises à partir du dispositif réseau (10) via à la fois la première liaison et la seconde liaison ;
le procédé de transmission comprenant une étape de paramétrage d'informations d'agrégation qui reçoit une notification selon laquelle la requête d'agrégation par la trame LACP est autorisée en provenance du dispositif du réseau, et paramètre les informations d'agrégation, les informations d'agrégation comprenant un identifiant système, un identifiant de groupe d'agrégation et un identifiant de port ; dans lequel un port de contournement (eth3) du commutateur (20a) est connecté à un port de contournement (eth3) de l'autre commutateur (20b), le procédé de transmission comprenant en outre une étape de transfert de données qui reçoit une détermination de présence d'une défaillance en provenance du port de contournement (eth3), et qui transfère les données de communication reçues par le port de contournement (eth3) au port représenté par l'identifiant de port inclus dans les informations d'agrégation ;
**caractérisé par le fait que** :
si une détermination d'absence de la défaillance est reçue en provenance du port de contournement (eth3), ledit transfert des données de communication par l'étape de transfert de données est arrêté.

7. Un programme d'instructions destinées à être exécutées par un calculateur pour mettre en oeuvre un processus de transmission d'une trame LACP à un dispositif réseau (10) via une première liaison selon la revendication 5.

8. Un support lisible par calculateur possédant un programme d'instructions destinées à être exécutées par un calculateur pour mettre en oeuvre un processus de transmission d'une trame LACP à un dispositif réseau (10) via une première liaison selon la revendication 7.

9. Un programme d'instructions destinées à être exécutées par un calculateur pour mettre en oeuvre un processus de transmission d'une trame LACP à un dispositif réseau (10) via une première liaison selon la revendication 6.

10. Un support lisible par calculateur possédant un programme d'instructions destinées à être exécutées par un calculateur pour mettre en oeuvre un processus de transmission d'une trame LACP à un dispositif réseau (10) via une première liaison selon la revendication 9.
